# EUROPÄISCHE PATENTSCHRIFT

(11) **EP 1 667 116 B1**
(45) Veröffentlichungstag und Bekanntmachung des Hinweises auf die Patenterteilung: **17.01.2007**
(21) Anmeldenummer: 04026344.4
(22) Anmeldetag: 05.11.2004
(51) Int. Cl.: G11B 5/09, G11B 5/008

(54) **Vorrichtung zum Beschreiben einer Magnetschicht**
Device for writing to a magnetic layer
Dispositif pour écriture sur une couche magnétique

(43) Veröffentlichungstag der Anmeldung: 07.06.2006
(73) Patentinhaber: SkiData AG, 5083 Gartenau (AT)
(72) Erfinder: Präauer, Johann, 5600, St. Johann (DE)
(74) Vertreter: Haft, von Puttkamer, Berngruber

(56) Entgegenhaltungen:
- US-A1- 2003 030 935

## Beschreibung

Die Erfindung bezieht sich auf eine Vorrichtung zum Beschreiben einer entweder mit niedriger oder hoher Koerzitivfeldstärke beschreibbaren Magnetschicht mit einer Magnetspule nach dem Oberbegriff des Anspruchs 1.

Zum Aufzeichnen von Daten mit einem Magnetkopf, beispielsweise auf dem Magnetstreifen einer Magnetkarte oder dergleichen Datenträger, werden Magnetschichten verwendet, deren magnetische Dipole zum Ausrichten eine niedrige Koerzitivfeldstärke (= low coercivity oder LoCo) oder eine hohe Koerzitivfeldstärke (= high coercivity oder HiCo) aufweisen. Während LoCo-Material eine Koerzitivfeldstärke in der Größenordnung von 300 Oerstedt besitzt, weist HiCo-Material üblicherweise eine Koerzitivfeldstärke zwischen 2.000 und 5.000 Oerstedt auf. Zwar ist aufgrund des schwächeren Magnetfeldes des Magnetkopfes der apparative Aufwand bei LoCo-Magnetschichten geringer als bei HiCo-Magnetschichten, LoCo-Magnetschichten besitzen jedoch den Nachteil, dass die aufgezeichneten Daten beispielsweise durch Permanentmagneten in der Umgebung, z.B. von Magnetverschlüssen, in Kopfhörern oder dergleichen, leichter gelöscht werden können.

Es sind bereits Magnetköpfe im Handel erhältlich, mit denen sowohl LoCo- wie HiCo-Magnetschichten beschrieben werden können, je nach dem, ob der jeweilige Betreiber, der die Magnetkarten einsetzt, LoCo- oder HiCo-Magnetschichten bevorzugt. Zum Beschreiben der LoCo-Magnetschicht wird dabei die Magnetspule mit einer niedrigen Stromstärke von beispielsweise etwa 20 mA bestromt, für HiCo-Magnetschichten hingegen mit einer höheren Stromstärke von z.B. etwa 200 mA. Die vorgegebenen Stromstärken müssen dabei im Wesentlichen eingehalten werden, da nicht nur eine geringere, sondern auch eine höhere Stromstärke zu einer unzureichenden Ausrichtung der magnetischen Dipolpartikel führen kann. Das Dokument US-A1-2003/0030935 offenbart eine derartige Einrichtung die ebenfalls den kennzeichnenden Teil des Anspruchs 1 beschreibt.

Die Magnetschicht wird mit Bits binärcodiert beschrieben. Durch Änderung der Richtung, in der der Strom durch die Magnetspule des Magnetkopfes fließt, können die magnetischen Dipolpartikel in der Magnetschicht in den einzelnen Bitstellen in die eine oder andere Richtung ausgerichtet werden. Für eine hohe Schreibgeschwindigkeit ist eine entsprechend schnelle Stromrichtungsänderung erforderlich. Bei den bekannten Magnetköpfen mit linear geregelter Konstantstromquelle ist daher die Magnetspule mit einer verhältnismäßig hohen Versorgungsspannung von z.B. 24 V über einen Widerstand oder dergleichen strombegrenzendes Element verbunden. Dies führt zu einer hohen Verlustleistung und damit einer hohen Wärmeentwicklung. Zudem ist ein erheblicher elektronischer Aufwand für die Stromrichtungsumkehr erforderlich.

Neben zusätzlichen Maßnahmen zur Kühlung müssen bei dem bekannten Magnetkopf wegen der hohen Wärmeentwicklung große robuste Bauteile verwendet werden, die entsprechend Platz beanspruchen. Dies führt neben dem elektronischen Aufwand zu erheblichen Kosten. Auch müssen beispielsweise durch unterschiedliche Widerstände Änderungen an der Hardware vorgenommen werden, wenn bei dem bekannten Magnetkopf ein Wechsel zwischen LoCo- und HiCo-Material erfolgt.

Aufgabe der Erfindung ist es daher, eine kostengünstige Vorrichtung mit geringem Platzbedarf zum Beschreiben von LoCo- und HiCo-Magnetschichten mit einem einzigen Magnetkopf bereitzustellen, ohne Änderungen der Hardware vornehmen zu müssen, wenn ein Wechsel von LoCo- auf HiCo-Material oder umgekehrt erfolgt, oder ein anderer Magnetkopf mit entsprechend geänderten Ansteuerungsanforderungen verwendet werden soll. Weiters sind die Magnetköpfe durch sukzessives Absenken des magnetischen Schreibstromes zu entmagnetisieren.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Die erfindungsgemäße Vorrichtung weist wenigstens einen Schalter zwischen der Spannungsquelle und der Magnetspule des Magnetkopfes auf. Ferner ist eine Einrichtung vorgesehen, mit der die Richtung des Stromflusses durch die Magnetspule beibehalten werden kann, wenn der Schalter zwischen der Spannungsquelle und der Magnetspule ausgeschaltet wird. Mit einer Messeinrichtung wird die Stromstärke in der Magnetspule gemessen. Zugleich steuert die Strommesseinrichtung den Schalter zwischen der Spannungsquelle und der Magnetspule an, und zwar derart, dass bei Aufzeichnung eines Bits der Schalter nach Erreichen der Stromstärke in der Magnetspule, die zum Beschreiben der mit niedriger Koerzitivfeldstärke oder hoher Koerzitivfeldstärke beschreibbaren Magnetschicht erforderlich ist, ausgeschaltet wird. Anschließend wird der Schalter taktweise so ein- und ausgeschaltet, dass die Stromstärke in der Magnetspule den zum Beschreiben erforderlichen Wert nicht über- und nicht unterschreitet.

Die Erfindung beruht nämlich unter anderem auf der Überlegung, dass beim Bestromen der Magnetspule in der Magnetspule Energie gespeichert wird, die nach Abschalten der Spannungsquelle abgebaut wird. D.h., wenn die zum Beschreiben erforderliche Stromstärke erreicht ist, kann die Spannungsquelle so lange abgeschaltet werden, bis die Stromstärke die zum Beschreiben der Magnetschicht erforderliche, vorgegebene untere Grenze erreicht.

Nach dem Abschalten der Spannungsquelle wird der Schalter wieder eingeschaltet, wenn die von der Messeinrichtung gemessene Stromstärke den zum Beschreiben der Magnetschicht erforderlichen, vorgegebenen unteren Grenzwert erreicht oder eine einstellbare fixe Zeit abgelaufen ist, welche von der Magnetbandart (LoCo oder HiCo) und der Magnetkopfinduktivität abhängig ist. Erfindungsgemäß wird so eine getaktete Stromquelle gebildet.

Die Einrichtung, die sicherstellt, dass der Strom nach dem Ausschalten des Schalters die vorgegebene Stromrichtung beibehält, kann beispielsweise ein Gleichrichter, also z.B. eine Diode oder ein Transistor, oder ein Schalter sein, der an Masse angeschlossen und damit über die an Masse angeschlossene Magnetspule die Stromrichtung aufrechterhält. Der Schalter wird dabei synchron eingeschaltet, wenn der Schalter zwischen der Spannungsquelle und der Magnetspule ausgeschaltet wird. Es versteht sich, dass erfindungsgemäß bevorzugt elektronische Schalter zur Anwendung kommen.

Für die Strommesseinrichtung ist ein geringer Widerstand von beispielsweise weniger als 2 Ω in einer Leitung vorgesehen, die einerseits an die Magnetspule und andererseits an Masse angeschlossen ist.

Im Gegensatz zur linear geregelten Konstantstromquelle entfällt damit bei der erfindungsgemäßen Vorrichtung ein hoher Widerstand oder dergleichen strombegrenzendes Element zwischen der Spannungsquelle und der Magnetspule, die zu einer hohen Verlustleistung, also einer hohen Wärmeentwicklung führt. Die erfindungsgemäße Vorrichtung kann damit aus kostengünstigen kleinen Bauteilen aufgebaut werden und nimmt dadurch nur wenig Platz in Anspruch. Auch kann mittels der Strommesseinrichtung die Stromstärke in der Magnetspule eingestellt werden, also beispielsweise auf etwa 20 mA oder 200 mA, wobei selbstverständlich auch jede andere Bestromung möglich ist, ohne dass an der Hardware Änderungen vorgenommen werden müssen. Dies bringt weiters den Vorteil mit sich, dass der Einsatz von Magnetköpfen eines anderen Herstellers ohne Hardwareänderungen möglich ist.

Im Magnetkopf bleibt nach einem Schreibvorgang eine Restremanenz bestehen, welche andere Tickets zerstören würde. Aus diesem Grund ist es bei manchen Magnetköpfen, abhängig vom verwendeten Material, nötig, eine definierte Entmagnetisierung durchzuführen. Dies kann mit der vorliegenden Schaltung ebenfalls leicht durchgeführt bzw. an die Erfordernisse eines Magnetkopfes eines anderen Herstellers ohne Hardwareänderung angepasst werden.

Zudem kann ein einfaches serielles Interface aus wenigen, beispielsweise lediglich vier Leitungen zwischen der erfindungsgemäßen getakteten Stromquelle und dem Prozessor eingesetzt werden, mit dem beispielsweise die Transporteinrichtung für die Magnetkarte und andere Einrichtungen der Vorrichtung zum Beschreiben der Magnetschicht angesteuert werden.

Eine hohe Schreibgeschwindigkeit hängt davon ab, dass die zum Beschreiben der Magnetschicht erforderliche Stromstärke schnell erreichbar ist, sobald der Schalter zwischen der Spannungsquelle und der Magnetspule geschlossen wird, um ein Bit zu schreiben. Dies setzt eine Spannungsquelle mit einer entsprechend hohen Spannung voraus. Dabei kann erfindungsgemäß ohne weiteres eine Spannungsquelle mit hoher Spannung von beispielsweise 12 V bis 26 V oder mehr verwendet werden.

An den einzelnen Bitstellen der binärcodierten Magnetschicht sind die magnetischen Dipole entweder in die eine oder die andere Richtung ausgerichtet, je nach dem in welcher Richtung der Strom in der Magnetspule fließt. Zur Stromrichtungsumkehr ist erfindungsgemäß vorzugsweise zwischen der Spannungsquelle und dem einen, ersten Ende der Magnetspule ein erster Schalter und zwischen dem anderen, zweiten Ende der Magnetspule ein zweiter Schalter vorgesehen, wobei während des Schreibens eines Bits der eine Schalter ausgeschaltet bleibt, während der andere Schalter, gesteuert von der Messeinrichtung, zur Messung des Stroms in der Magnetspule ein- und ausgeschaltet wird. Zum Schreiben des nächsten Bits mit entgegengesetzt ausgerichteten magnetischen Dipolen wird die Stromrichtung in der Magnetspule umgekehrt, d.h. während des Schreibens des nächsten Bits bleibt der andere Schalter ausgeschaltet, während der eine Schalter, gesteuert von der Messeinrichtung ein- und ausgeschaltet wird. Wenn im Zusammenhang mit der Erfindung von einem Schalter die Rede ist, sind selbstverständlich in erster Linie elektronische Schalter gemeint.

Nachstehend ist die Erfindung anhand der Zeichnung beispielhaft näher erläutert. Darin zeigen:
- Figur 1: schematisch einen Magnetkopf beim Beschreiben einer Magnetschicht;
- Figur 2: einen Teil einer Schaltung nach einer ersten Ausführungsform;
- Figur 3 und 4: ein Diagramm, das die Stromstärke in der Magnetspule beim Beschreiben einer HiCo- bzw. LoCo-Magnetschicht zeigt; und
- Figur 5: eine Schaltung nach einer zweiten Ausführungsform.

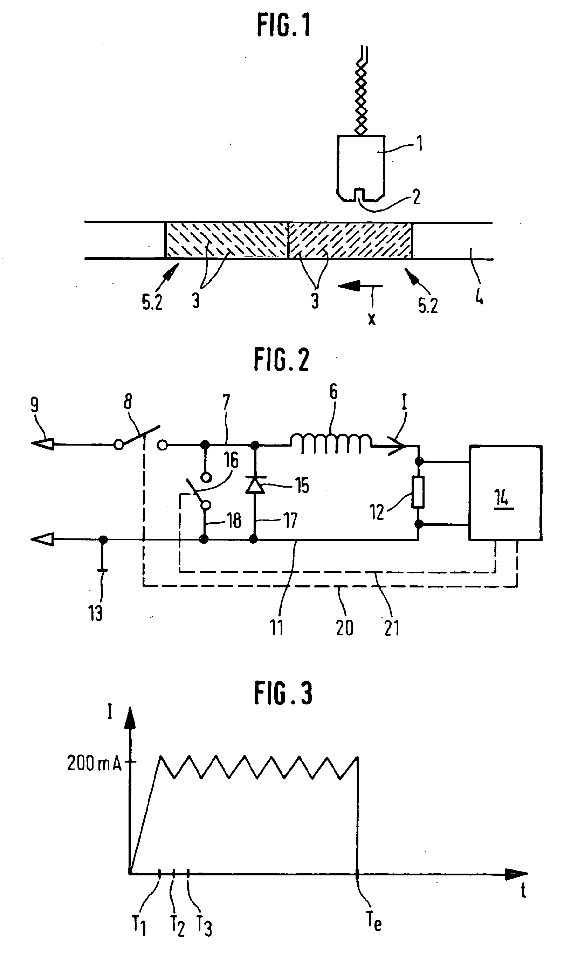

Gemäß Figur 1 weist der Magnetkopf 1 einen Luftspalt 2 geringer Breite zum Austritt der Magnetfeldlinien aus, die die magnetischen Dipole 3 in der Magnetschicht 4 entweder in die eine Richtung gemäß dem Bit 5.1 oder die andere gemäß dem Bit 5.2 ausrichten.

Damit die Dipole 3 ausgerichtet bzw. geändert werden, muss auf sie eine bestimmte magnetische Feldstärke größer der Koerzitivfeldstärke ausgeübt werden, die bei einer LoCo-Magnetschicht 3 z.B. 300 Oe und bei einer HiCo-Magnetschicht 3 z.B. 3.000 Oe beträgt. D.h., die Magnetspule in dem Magnetkopf 1 muss für eine LoCo-Magnetschicht mit einer niedrigen Stromstärke von beispielsweise 20 mA und für eine HiCo-Magnetschicht mit einer höheren Stromstärke von z.B. 200 mA bestromt werden. Zur Ausrichtung der Dipole 3 in die eine Richtung z.B. beim Bit 5.1 fließt der Strom durch die Magnetspule in den Magnetkopf 1 in die eine und zur Ausrichtung der Dipole 3 beim Bit 5.2 in die andere Richtung ist die Stromrichtung umgekehrt.

Bei der Schaltung nach Figur 2 ist die Magnetspule 6 im Magnetkopf 1 mit einem Ende über eine Leitung 7 mit einem Schalter 8 an eine Spannungsquelle 9 von beispielsweise 12 V oder 24 V angeschlossen. Das andere Ende der Magnetspule 6 ist über eine Leitung 11 und einen Widerstand 12 von weniger als 2 Ω bei 13 an die Masse angeschlossen.

Mit einer Strommesseinrichtung 14 zur Messung der Stromstärke in der Spule 6 wird der Spannungsabfall beiderseits des Widerstandes 12 abgegriffen.

Damit nach dem Ausschalten des Schalters 8 der Strom in der Spule 6 in der gleichen Richtung weiterfließt, kann ein Gleichrichter 15, z.B. eine Diode, oder ein weiterer Schalter 16 zwischen dem Schalter 8 und der Spule 6 an die Leitung 7 angeschlossen sein, die bei 17 bzw. 18 an die Masse angeschlossen sind.

Wie durch die gestrichelten Linien 20, 21 dargestellt, werden die Schalter 8 und 16 von der Strommesseinrichtung 14 angesteuert.

Damit die Magnetspule 6 die erforderliche magnetische Feldstärke von z.B. 3.000 Oe auf die HiCo-Partikel 3 ausübt, um auf der Magnetschicht 4 ein Bit 5.1, 5.2 zu schreiben, muss die Magnetspule 6 mit einer Stromstärke von beispielsweise 200 ± 20 mA bestromt werden. Wie in Figur 3 dargestellt, steigt beim Einschalten des Schalters 8 der Strom in dem Zeitintervall T₁ auf eine Stromstärke von z.B. 210 mA an. Wenn dieser Wert von der Strommesseinrichtung 14 erfasst wird, wird der Schalter 8 von der Strommesseinrichtung 14 über die Linie 20 angesteuert und ausgeschaltet. Der in der Spule 6 gespeicherte Strom nimmt dann im Intervall T₂ auf z.B. 190 mA ab. Alsdann wird der Schalter 8 im Zeitintervall T₃ erneut eingeschaltet, bis die von der Strommesseinrichtung 14 gemessene Stromstärke wieder 210 mA beträgt. Das Aus- und Einschalten des Schalters 8 in den Zeitintervallen T₂ und T₃ wird so lange fortgesetzt, bis bei Tₑ der Schreibvorgang für das jeweilige Bit 5.1 oder 5.2 beendet ist. Während des Bit-Schreibvorgangs wird die Magnetschicht 4 relativ zu dem Magnetkopf 1 mit der Transporteinrichtung der Schreibeinrichtung bewegt, entsprechend dem Pfeil X.

Obgleich sich die Stromstärke in der Spule 6 innerhalb der genannten Grenzen entsprechend dem dreieckförmigen Verlauf gemäß Figur 3 ändert, wird beim Lesen einer mit der erfindungsgemäßen Vorrichtung beschriebenen Magnetschicht ein einwandfreies Lesesignal detektiert.

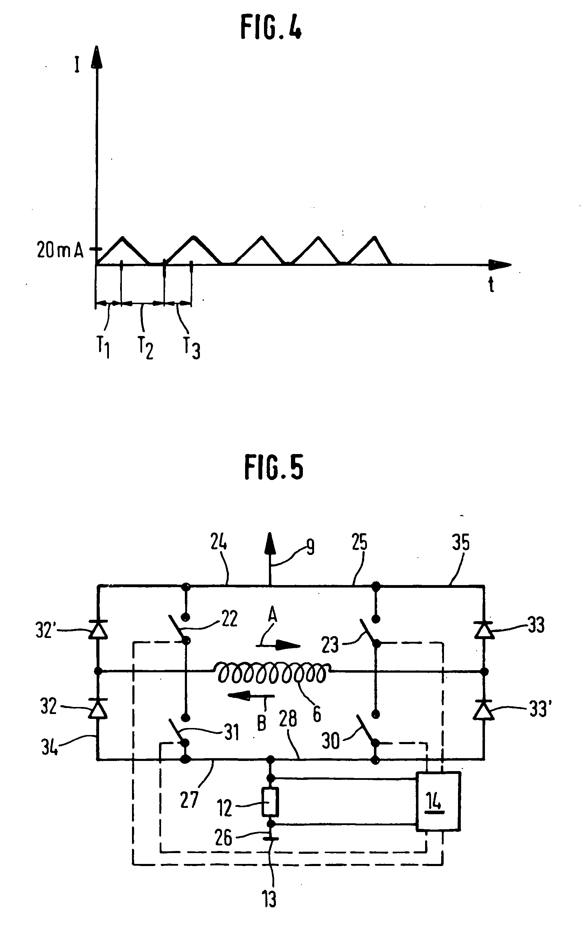

Beim Beschreiben der LoCo-Magnetschicht gemäß Figur 4 fällt die Stromstärke I nach dem Einschaltintervall T₁ beim Ausschalten des Schalters 8 im Intervall T₂ auf Null ab. Um eine mangelnde Ausrichtung der magnetischen Dipole 3 während dieser Nullphase zu verhindern, muss eine entsprechend hohe Schaltfrequenz sichergestellt werden, wobei sich gezeigt hat, dass eine kurze Nullphase von z.B. 2 *µ*s oder weniger die Ausrichtung der Dipole 3 und damit das Lesesignal nicht beeinträchtigt.

Um durch Stromumkehr in die eine bzw. andere Stromrichtung in der Magnetspule 6 Bitstellen 5.1 und 5.2 mit entgegengesetzt ausgerichteten Dipolen 3 gemäß Figur 1 in der Magnetschicht 4 zu erhalten, kann die in Figur 5 dargestellte Schaltung verwendet werden.

Dabei sind zur Stromumkehr zwei Schalter 22, 23 in den beiden, an die Spannungsquelle 9 angeschlossenen Leitungen 24, 25 vorgesehen, die mit dem einen bzw. anderen Ende der Magnetspule 6 verbunden sind und von der Strommesseinrichtung 14 angesteuert werden, die beiderseits des Widerstandes 12 an die Leitung 26 angeschlossen ist, die die Masse 13 mit den Leitungen 27, 28 verbindet, die an das eine bzw. andere Ende der Magnetspule 6 angeschlossen sind und mit jeweils einem Schalter 30, 31 versehen sind, welche unter anderem zur Aufrechterhaltung der Stromflussrichtung vorgesehen sind, wenn der jeweilige Schalter 22, 23 während des Intervalls T₂ ausgeschaltet wird. Die Schalter 30, 31 werden ebenfalls von der Strommesseinrichtung 14 angesteuert.

D.h., wenn der Strom z.B. zum Aufzeichnen des Bits 5.1 in der einen Richtung A durch die Spule 6 fließt, wird der zweite Schalter 23 während es gesamten Bitaufzeichnungsvorgangs geöffnet, während im Intervall T₁ der erste Schalter 22 und der dritte Schalter 30 geschlossen und der vierte Schalter 31 geöffnet sind. Während des Intervalls T₂ wird der erste Schalter 22 geöffnet und der vierte Schalter 31 geschlossen, während des Intervalls T₃ wird der erste Schalter 22 wieder geschlossen und der vierte Schalter 31 wieder geöffnet, usw.

Zur Umkehr des Stromes in die entgegengesetzte Richtung B zum Aufzeichnen des nächsten Bits 5.2 mit umgekehrt ausgerichteten Dipolen 3 wird der erste Schalter 22 während des gesamten Bitaufzeichnungsvorgangs geöffnet. Während des Intervalls T₁ wird der zweite Schalter 23 und der vierte Schalter 31 geschlossen, und der dritte Schalter 30 geöffnet. Während des Intervalls T₂ wird der zweite Schalter 23 geöffnet und der dritte Schalter 30 wird, wie der vierte Schalter 31, geschlossen. Im Intervall T₃ nehmen die vier Schalter 22, 23, 30, 31 wieder die gleiche Stellung wie in dem Intervall T₁ ein, usw.

Weiterhin sind bei der Schaltung nach Figur 5 vier Dioden 32, 32', 33, 33' vorgesehen, wobei die Diode 32 in der Leitung 34 vorgesehen ist, welche den vierten Schalter 31 überbrückt, während die Diode 33 in der Leitung 35 and die Leitung 25 zwischen dem Schalter 23 und der Spannungsquelle 9 angeschlossen ist. Während die Dioden 32 und 33 parallel zu dem vierten Schalter 31 bzw. dem zweiten Schalter 23 geschaltet sind, sind die Dioden 32' und 33' parallel zu dem ersten Schalter 22 bzw. dem dritten Schalter 30 geschaltet. Durch die Dioden 32, 32', 33, 33' werden die Spannungsspitzen außerhalb der Spannungsversorgungswerte begrenzt, die nach dem Ausschalten der Schalter 22 und 30 bzw. 23 und 31 auftreten können. Sie dienen also lediglich dem Schutz der Schaltung.

## Patentansprüche

1. Vorrichtung zum Beschreiben einer entweder mit niedriger oder hoher Koerzitivfeldstärke beschreibbaren Magnetschicht (4) mit einem Magnetkopf (1) mit einer Magnetspule (6) und einer Spannungsquelle (9), **gekennzeichnet durch** wenigstens einen Schalter (8) zwischen der Spannungsquelle (9) und der Magnetspule (6), eine Einrichtung zur Aufrechterhaltung der Richtung (A, B) des Stromflusses **durch** die Magnetspule (6), und eine Strommesseinrichtung (14) zur Bestimmung der Stromstärke in der Magnetspule (6), wobei die Strommesseinrichtung (14) den Schalter (8) zwischen der Spannungsquelle (9) und der Magnetspule (6) derart ansteuert, dass der Schalter (8) nach Erreichen der Stromstärke (I) in der Magnetspule (6), die zum Beschreiben der mit niedriger Koerzitivfeldstärke oder hoher Koerzitivfeldstärke beschreibbaren Magnetschicht (4) erforderlich ist, ausgeschaltet und dann taktweise so ein- und ausgeschaltet wird, dass die Stromstärke (I) in der Magnetspule (6) den zum Beschreiben erforderlichen Wert nicht über- und nicht unterschreitet.

2. Vorrichtung nach Anspruch 1, **dadurch gekennzeichnet, dass** die Einrichtung zur Aufrechterhaltung der Stromflussrichtung (A, B) durch einen Gleichrichter (15) und/oder einen Schalter (16) gebildet wird.

3. Vorrichtung nach Anspruch 1, **dadurch gekennzeichnet, dass** für die Strommesseinrichtung (14) ein Widerstand (12) im Strompfad vorgesehen ist.

4. Vorrichtung nach einem der vorstehenden Ansprüche, wobei die Magnetspule (6) zum Schreiben eines Bits (5.1, 5.2) mit der erforderlichen Stromstärke (I) beaufschlagt wird, worauf die Stromrichtung (A, B) zum Schreiben des nächsten Bits (5.2, 5.1) umgedreht wird, **dadurch gekennzeichnet, dass** zur Stromrichtungsumkehr zwischen der Spannungsquelle (9) und dem einen, ersten Ende der Magnetspule (6) ein erster Schalter (22) und zwischen dem anderen, zweiten Ende der Magnetspule (6) ein zweiter Schalter (23) vorgesehen ist, wobei während des Schreibens eines Bits (5.1, 5.2) der eine Schalter (22, 23) ausgeschaltet wird, während der andere Schalter (23, 22), gesteuert von der Strommesseinrichtung (14), taktweise ein- und ausgeschaltet wird.

5. Vorrichtung nach Anspruch 3 und 4, **dadurch gekennzeichnet, dass** zwischen dem Widerstand (12) und dem zweiten Ende der Magnetspule (6) ein dritter Schalter (30) und zwischen dem Widerstand (12) und dem ersten Ende der Magnetspule (6) ein vierter Schalter (31) vorgesehen ist, wobei nach dem ersten Takt (T₁) bei eingeschaltetem ersten Schalter (22) und eingeschaltetem dritten Schalter (30) zum Erreichen der zum Schreiben erforderlichen Stromstärke (I) taktweise abwechselnd der erste Schalter (22) ausgeschaltet und der vierte Schalter (31) eingeschaltet bzw. der erste Schalter (22) eingeschaltet und der vierte Schalter (31) eingeschaltet wird, während bei umgekehrter Stromrichtung nach dem ersten Takt (T₁) mit eingeschaltetem zweiten Schalter (23) und eingeschaltetem vierten Schalter (31) zum Erreichen der zum Beschreiben erforderlichen Stromstärke taktweise der zweite Schalter (23) ausgeschaltet und der vierte Schalter (31) eingeschaltet wird, bzw. der zweite Schalter (23) eingeschaltet und der dritte Schalter (30) ausgeschaltet wird.

## Claims

1. An apparatus for writing a magnetic layer (4) writable with either low or high coercive field strength with a magnetic head (1) with a magnet coil (6) and a voltage source (9), **characterized by** at least one switch (8) between the voltage source (9) and the magnet coil (6), a device for maintaining the direction (A, B) of current flow through the magnet coil (6), and a current measuring device (14) for determining the current intensity in the magnet coil (6), whereby the current measuring device (14) drives the switch (8) between the voltage source (9) and the magnet coil (6) in such a way that after the current intensity (I) required for writing the magnetic layer (4) writable with low coercive field strength or high coercive field strength is reached in the magnet coil (6), the switch (8) is switched off and then switched on and off cyclically such that the current intensity (I) in the magnet coil (6) does not exceed or undershoot the level required for writing.

2. The apparatus according to claim 1, **characterized in that** the device for maintaining the current flow direction (A, B) is formed by a rectifier (15) and/or a switch (16).

3. The apparatus according to claim 1, **characterized in that** a resistor (12) is provided in the current path for the current measuring device (14).

4. The apparatus according to any of the above claims, whereby the magnet coil (6) is subjected to the required current intensity (I) for writing a bit (5.1, 5.2), whereupon the current direction (A, B) is reversed for writing the next bit (5.2, 5.1), **characterized in that**, for current reversal, a first switch (22) is provided between the voltage source (9) and the one, first end of the magnet coil (6), and a second switch (23) between the other, second end of the magnet coil (6), the one switch (22, 23) being switched off during the writing of a bit (5.1, 5.2) while the other switch (23, 22) is switched on and off cyclically, controlled by the current measuring device (14).

5. The apparatus according to claims 3 and 4, **characterized in that** a third switch (30) is provided between the resistor (12) and the second end of the magnet coil (6), and a fourth switch (31) between the resistor (12) and the first end of the magnet coil (6), whereby after the first time (T₁), with the first switch (22) switched on and the third switch (30) switched on, the first switch (22) is switched off and the fourth switch (31) switched on, or the first switch (22) switched on and the fourth switch (31) switched on, alternately cyclically for reaching the current intensity (I) required for writing, while with the reverse current direction after the first time (T₁), with the second switch (23) switched on and the fourth switch (31) switched on, the second switch (23) is switched off and the fourth switch (31) switched on, or the second switch (23) switched on and the third switch (30) switched off, cyclically, for reaching the current intensity required for writing.

## Revendications

1. Dispositif pour écriture sur une couche magnétique (4) imprimable avec intensité de champ coercitive soit faible soit élevée, comportant une tête magnétique (1) avec une bobine magnétique (6) et une source de tension (9), **caractérisé par** au moins un commutateur (8) entre la source de tension (9) et la bobine magnétique (6), par un dispositif pour maintenir le sens (A, B) du flux de courant à travers la bobine magnétique (6), et par un ampèremètre (14) pour déterminer l'intensité de courant dans la bobine magnétique (6), l'ampèremètre (14) pilotant le commutateur (8) entre la source de tension (9) et la bobine magnétique (6) de telle sorte qu'après avoir atteint l'intensité de courant (I) dans la bobine magnétique (6), qui est nécessaire à l'écriture sur la couche magnétique (4) imprimable avec une intensité de champ coercitive faible ou élevée, le commutateur (8) est mis hors circuit et ensuite mis en circuit et hors circuit de manière cyclique de telle sorte que l'intensité de courant (I) dans la bobine magnétique (6) ne dépasse ni vers le haut ni vers le bas la valeur nécessaire à l'écriture.

2. Dispositif selon la revendication 1, **caractérisé en ce que** le dispositif pour maintenir le sens du flux de courant (A, B) est formé par un redresseur (15) et/ou par un commutateur (16).

3. Dispositif selon la revendication 1, **caractérisé en ce qu'**il est prévu pour l'ampèremètre (14) une résistance (12) dans le trajet du courant.

4. Dispositif selon l'une des revendications précédentes, dans lequel la bobine magnétique (6) est sollicitée pour écrire un bit (5.1, 5.2) avec l'intensité de courant (I) nécessaire, après quoi le sens de courant (A, B) pour écrire le bit suivant (5.2, 5.1) est inversé, **caractérisé en ce que** pour inverser le sens du courant, il est prévu un premier commutateur (22) entre la source de courant (9) et ladite une première extrémité de la bobine magnétique (6) et un deuxième commutateur (23) entre ladite autre deuxième extrémité de la bobine (6), et pendant l'écriture d'un bit (5.1, 5.2), ledit un commutateur (22, 23) est mis hors circuit tandis que l'autre commutateur (23, 22), piloté par l'ampèremètre (14), est mis en circuit et hors circuit de manière cyclique.

5. Dispositif selon la revendication 3 ou 4, **caractérisé en ce que** entre la résistance (12) et la deuxième extrémité de la bobine magnétique (6) est prévu un troisième commutateur (30) et entre la résistance (12) et la première extrémité de la bobine magnétique (6) est prévu un quatrième commutateur (31), et après la première cadence (T₁), lorsque le premier commutateur (22) est mis en circuit et le troisième commutateur (30) est mis en circuit, pour atteindre l'intensité de courant (I) nécessaire à l'écriture, le premier commutateur (22) est mis hors circuit et le quatrième commutateur (31) est mis en circuit ou respectivement le premier commutateur (22) est mis en circuit et le quatrième commutateur (31) est mis en circuit, de manière cyclique et en alternance, tandis que lorsque le sens du courant est inversé, après la première cadence (T₁) lorsque le deuxième commutateur (23) est mis en circuit et le quatrième commutateur (31) est mis en circuit, pour atteindre l'intensité de courant nécessaire à l'écriture, le deuxième commutateur (23) est mis hors circuit et le quatrième commutateur (31) est mis en circuit, ou respectivement, le deuxième commutateur (23) est mis en circuit et le troisième commutateur (30) est mis hors circuit, de manière cyclique.
